(19) **Europäisches Patentamt / European Patent Office / Office européen des brevets**

(11) **EP 1 430 272 B1**

(12) **FASCICULE DE BREVET EUROPEEN**

(45) Date de publication et mention
de la délivrance du brevet:
**01.02.2012 Bulletin 2012/05**

(51) Int Cl.:
***G01S 19/47*** *(2010.01)*  ***G01C 21/16*** *(2006.01)*

(21) Numéro de dépôt: **02783202.1**

(22) Date de dépôt: **24.09.2002**

(86) Numéro de dépôt international:
**PCT/FR2002/003258**

(87) Numéro de publication internationale:
**WO 2003/029755 (10.04.2003 Gazette 2003/15)**

(54) **CENTRALE DE NAVIGATION INERTIELLE HYBRIDE A INTEGRITE AMELIOREE**

HYBRIDE TRÄGHEITSNAVIGATIONSZENTRALE MIT VERBESSERTER INTEGRITÄT

HYBRID INERTIAL NAVIGATION SYSTEM WITH IMPROVED INTEGRITY

(84) Etats contractants désignés:
**DE FR GB IT**

(30) Priorité: **28.09.2001 FR 0112546**

(43) Date de publication de la demande:
**23.06.2004 Bulletin 2004/26**

(73) Titulaire: **Thales**
**75008 Paris (FR)**

(72) Inventeurs:
• **COATANTIEC, Jacques,**
**Thales Intellectual Property**
**F-94117 Arcueil Cedex (FR)**

• **GUILLARD, Patrice,**
**Thales Intellectual Property**
**F-94117 Arcueil Cedex (FR)**

(74) Mandataire: **Guérin, Michel et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-00/48014    US-B1- 6 292 750**

# Description

L'invention concerne les instruments d'aide à la navigation et au pilotage, et en particulier ceux qui sont destinés à la navigation aérienne dans laquelle les contraintes de précision sur la position et la vitesse sont élevées et dans laquelle il est nécessaire de connaître à tout moment l'intégrité de l'information donnée par les instruments de mesure de position et de vitesse.

L'utilisation de centrales de navigation inertielles dans les aéronefs est très classique aujourd'hui. Ces centrales utilisent des accéléromètres pour déterminer des accélérations selon des axes définis par rapport à l'aéronef, des gyromètres pour déterminer des vitesses de rotation angulaires par rapport à des axes également définis par rapport à l'aéronef, et éventuellement d'autres capteurs tels qu'un baro-altimètre. Par intégration des mesures gyrométriques, on détermine l'orientation de l'aéronef à un moment donné ; par intégration des mesures accélérométriques, qui peuvent être rapportées à un repère terrestre extérieur à l'aéronef grâce à la connaissance de l'orientation de l'aéronef, on détermine les composantes de vitesse de l'aéronef dans ce repère terrestre. Par intégration des vitesses, on détermine des positions géographiques.

Les capteurs de mesure sont cependant imparfaits et présentent des erreurs intrinsèques ou biais de mesure, qui peuvent d'ailleurs varier au cours de la navigation. De plus ils sont sujets aux bruits de mesure, en ce sens que se superposent au signal utile, représentant la grandeur physique recherchée, des variations aléatoires ne correspondant pas aux variations de la grandeur mesurée. Les signaux électriques de mesure sont de plus traités par des circuits électroniques qui introduisent eux-mêmes du bruit.

Les biais et bruits de mesure sont d'autant plus gênants que les calculs de position faits à partir des résultats de mesure des capteurs impliquent des intégrations. L'intégration engendre une dérive de la valeur mesurée, dérive.qui croît progressivement au cours du temps dès lors que la valeur intégrée est biaisée au départ. Une double intégration (intégrale d'accélération pour donner la vitesse puis intégrale de vitesse pour donner la position) accroît encore cette dérive dans des proportions considérables.

En résumé, les centrales inertielles sont très précises sur une très courte durée mais sont sujettes, du fait de l'intégration temporelle systématique des biais, à une dérive importante qui oblige à les recaler périodiquement à partir d'autres informations de position (ou de vitesse).

Un mode de recalage longtemps utilisé a consisté à utiliser un réseau de balises au sol pour fournir aux aéronefs qui les survolent des signaux de position permettant de recaler leurs instruments de navigation.

Plus récemment, on a commencé à recaler les centrales inertielles à partir de récepteurs de positionnement par satellites, embarqués dans les aéronefs et tirant des informations de position et de vitesse, en repère terrestre, à partir des signaux qu'ils reçoivent des satellites.

On réalise ainsi des centrales hybrides profitant à la fois de l'excellente qualité de mesure à très court terme des centrales inertielles (mesure très faiblement bruitée) et de la grande précision de position géographique offerte par les systèmes de positionnement par satellites.

Toutefois, les mesures de position faites par les récepteurs de positionnement par satellites sont intrinsèquement fortement bruitées à court terme, de sorte qu'il faudrait moyenner leurs mesures pour déterminer une position précise ; mais, dans un véhicule mobile, et surtout un avion qui se déplace rapidement, on ne peut pas attendre de moyenner les mesures pour obtenir une position précise puisque l'avion se sera déplacé entre deux mesures.

D'autres problèmes peuvent survenir, tels que des changements de constellation de satellites observés par les récepteurs, qui donnent lieu à des sauts brusques de position mesurée, ou des pannes de satellites qui émettent des signaux erronés, ou même encore des pannes de la centrale inertielle.

L'hybridation des deux systèmes, système inertiel et système de positionnement par satellites, pour améliorer la qualité des mesures de position et de vitesse, pose des problèmes difficiles.

On essaye en général de résoudre ces problèmes au mieux par l'utilisation d'algorithmes de filtrage, généralement connus sous le nom de filtrages de Kalman. Il s'agit d'un filtrage numérique effectué au cours des calculs qui permettent de déterminer une position dite "position hybride" à partir des informations provenant de la centrale inertielle et des informations données par le récepteur de positionnement par satellites.

En cas de perte ou de dégradation des mesures de positionnement par satellites (dont il faut rappeler qu'elles peuvent facilement être perdues parce que le signal émis par les satellites est extrêmement faible et qu'elles peuvent être erronées, par exemple à cause de la présence de multitrajets entre un satellite et le récepteur), le filtrage de Kalman permet de continuer à calculer une position hybride qui est de type inertielle (c'est-à-dire analogue à celle que fournirait une centrale inertielle toute seule) mais qui est corrigée des erreurs de dérive de la centrale ; en effet, le filtrage de Kalman calcule en permanence ces erreurs et peut se servir des erreurs repérées juste avant la perte des signaux satellites pour continuer à corriger la centrale après cette perte jusqu'au moment où les signaux satellites redeviennent disponibles. Voir p.e. US6292750.

Cependant, la précision et la fiabilité des centrales inertielles hybrides corrigées par récepteurs de positionnement par satellite n'est pas suffisante pour certaines applications, telles que l'atterrissage automatique des aéronefs. Pus généralement, on souhaite améliorer constamment la précision des mesures de position, de vitesse, d'attitude, etc. des véhicules, et il est en outre souvent nécessaire non seulement de donner une position avec précision, mais encore de connaître la valeur de la précision associée à une mesure, étant donné que cette valeur n'est pas fixe (elle dépend de très nombreux paramètres) et qu'elle peut être utile pour permettre de prendre des décisions. Par exemple, en cas de descente au dessous d'un certain seuil de précision, le calculateur de bord de l'aéronef peut déclencher une alarme visant à interdire de procéder à un atterrissage.

On cherche en particulier à être capable de donner une position avec précision même si l'un des satellites présente un défaut tel qu'une petite dérive d'horloge. Une dérive d'horloge de satellite est un défaut particulièrement difficile à détecter par un récepteur de positionnement par satellites et même par une centrale hybride inertielle/satellite ; en effet, les signaux émis par le satellite continuent à présenter toutes les apparences de signaux intègres. Mais ils sont erronés, et l'absence de saut de position dans les résultats fournis périodiquement par le récepteur de signaux par satellite fait que la panne est très difficilement détectable. Il est pourtant nécessaire que l'utilisateur ou le calculateur de bord soit averti de ce type de défaut.

Un but de la présente invention est donc d'améliorer les centrales de navigation inertielle hybrides utilisant des récepteurs de positionnement par satellites, et tout particulièrement celles qui fournissent non seulement une position hybride mais aussi un rayon de protection autour de cette position, rayon à l'intérieur duquel l'intégrité de la position est garanti avec une probabilité d'erreur qui est bornée par une valeur supérieure définie. On reviendra plus en détail sur cette notion de rayon de protection.

Selon l'invention, on utilise un filtre de Kalman (c'est-à-dire un filtre à prédiction et recalage d'erreur d'estimation, basé sur un modèle de propagation dans le temps des erreurs du système à corriger et sur une comparaison avec des valeurs de mesure observées), dont la particularité est la suivante : il utilise comme valeurs de mesure observées, à comparer périodiquement avec des valeurs prédites, les différences entre d'une part les pseudo-distances mesurées par le récepteur de signaux satellites entre ce récepteur et les différents satellites et d'autre part les distances correspondantes calculées par la centrale inertielle entre la centrale et les mêmes satellites, l'incrément de distance d'une mesure à la suivante entre la pseudo-distance précédemment mesurée par le récepteur et la nouvelle pseudo-distance mesurée sur un axe satellite étant déterminé par un comptage de la variation de phase de la fréquence porteuse des signaux satellites depuis la mesure précédente et non par une mesure de pseudo-distance indépendante.

Pour cela, le filtrage à prédiction et recalage d'erreur utilise, pour chaque axe satellite, une position initiale de récepteur, relativement au satellite, qui est une position obtenue par calcul à partir des positions temporelles de codes pseudo-aléatoires présents dans les signaux reçus des satellites et il mémorise la phase de la porteuse au moment de cette mesure de position ; et d'autre part, il utilise, comme nouvelle position de récepteur par rapport au satellite, lors de l'étape suivante d'observation de la position du récepteur, non pas une nouvelle mesure de position, mais une simple modification de la position précédente, par addition de la variation de phase, en nombre de tours de phase et fraction de tour, ramenée en distance le long de l'axe satellite, de la fréquence porteuse du signal satellite.

Autrement dit, les filtres de Kalman qu'on a pu proposer dans le passé, pour les centrales hybrides inertielles recalées par positionnement satellite, utilisent généralement comme mesure de position observée, pour le recalage du modèle de propagation des erreurs inertielles, une variation de position en axes géographiques, ou même une variation de pseudo-distances le long des axes satellites, la variation de pseudo-distance résultant des variations de position temporelle du code pseudo-aléatoire local d'un canal du récepteur de positionnement. Ici, l'incrément de position entre deux recalages ne résulte pas de cette variation de position temporelle du code pseudo-aléatoire, elle résulte de la variation de phase de la porteuse sur chaque axe satellite/récepteur.

On rappelle qu'un récepteur de positionnement par satellite classique comprend un asservissement d'un code pseudo-aléatoire local pour chaque canal correspondant à un satellite, et un asservissement de la phase de la fréquence porteuse du signal satellite. Ce deuxième asservissement, couplé avec le premier, sert notamment à prendre en compte l'effet Doppler induit par la vitesse relative du récepteur par rapport à un satellite selon l'axe reliant le récepteur au satellite. L'asservissement de code utilise un premier oscillateur à commande numérique pour établir et synchroniser le code local qui permet la détermination de pseudo-distance, tandis que l'asservissement de porteuse utilise un deuxième oscillateur à commande numérique qui permet d'établir une variation de phase locale asservie sur la phase de la porteuse. Ces oscillateurs délivrent une valeur numérique de phase croissant par incréments contrôlés par un calculateur qui pilote les circuits d'asservissement numérique. Selon l'invention, pour observer les variations de distance entre le récepteur et un satellite dans le but de recaler une centrale inertielle par un récepteur de positionnement par satellite, on utilise la sortie numérique du deuxième oscillateur à commande numérique et on ajoute à la distance précédemment calculée par le récepteur la variation de phase observée sur le deuxième oscillateur, ramenée à une distance de propagation du signal satellite (dont la fréquence est connue).

Par conséquent, l'invention propose un système de navigation comprenant une centrale de navigation inertielle hybridée avec au moins un récepteur de positionnement par satellite, la centrale inertielle fournissant des informations de position résultant au moins en partie de mesures accélérométriques et gyrométriques, et le récepteur fournissant des pseudo-distances représentant la distance entre le récepteur et des satellites, le récepteur comprenant, pour chaque canal du récepteur, un oscillateur à commande numérique de phase asservi sur la phase de porteuse d'un signal de satellite correspondant à ce canal, et le système de navigation fournissant des valeurs de position hybrides résultant d'une combinaison de données numériques de position provenant de la centrale et de données numériques provenant du récepteur, le système comprenant un moyen d'estimation d'une nouvelle position hybride à partir d'un écart constaté entre d'une part des pseudo-distances mesurées par le récepteur entre le récepteur et les différents satellites et d'autre part des distances correspondantes calculées par la centrale inertielle entre la centrale et les mêmes satellites, ce moyen comprenant un filtre numérique, de type filtre de Kalman, permettant la prédiction d'un écart et l'adaptation du filtre en fonction de la comparaison entre les écarts constatés et des écarts prédits, caractérisé en ce que, dans le filtre numérique, l'incrément de distance d'un instant de mesure à l'instant suivant, entre la pseudo-distance précédemment mesurée par le récepteur sur un axe satellite en vue de la constatation d'un écart et la nouvelle pseudo-distance mesurée par le récepteur sur cet axe, est la variation de phase de l'oscillateur numérique entre les deux instants de mesure, cette variation étant ramenée en distance le long de l'axe satellite.

Le recalage de la centrale inertielle se fait donc en observant régulièrement l'évolution de la phase de la porteuse sur chaque canal du récepteur, cette évolution ayant pour caractéristique d'être très peu bruitée, ce qui va permettre non seulement d'obtenir une position hybride précise mais aussi d'obtenir une mesure efficace de la précision de détermination de la position hybride, sous forme d'un calcul de rayon de protection. Le calcul du rayon de protection est fait selon l'invention à partir du même filtre de Kalman, incrémenté de la manière indiquée ci-dessus.

Le calage initial du système hybride se fait en principe en donnant à la position hybride une valeur initiale qui est une position calculée par le récepteur de positionnement par satellites à partir de la position temporelle des codes pseudo-aléatoires présents dans les signaux des différents satellites.

Un recalage direct (réinitialisation de la centrale inertielle) par une nouvelle détermination d'une position satellite pourra être fait lorsque le rayon de protection propre du récepteur de positionnement par satellite (qui fournit des pseudo-distances avec un certain rayon de protection dépendant notamment de la configuration de la constellation de satellites actuellement observée) deviendra plus faible que le rayon de protection de la centrale hybride. C'est pourquoi il est particulièrement avantageux de calculer à la fois un rayon de protection propre des mesures fournies par le récepteur et un rayon de protection des mesures fournies par la centrale hybridée.

D'autres caractéristiques et avantages de l'invention apparaîtront à la lecture de la description détaillée qui suit et qui est faite en référence aux dessins annexés dans lesquels :

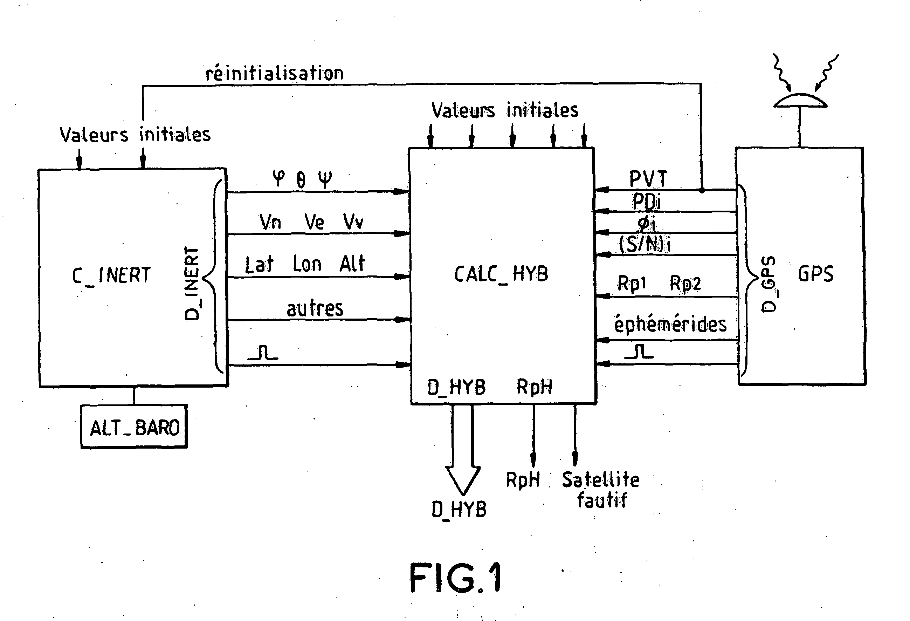

- la figure 1 représente schématiquement le principe d'une centrale inertielle hybride selon l'invention ;
- la figure 2 représente un organigramme de fonctionnement du filtre de Kalman ;
- la figure 3 représente la structure générale d'un récepteur de positionnement par satellite, comprenant un oscillateur à commande numérique dont la sortie représente la phase de la porteuse du signal satellite ;
- la figure 4 représente l'architecture générale des calculs de rayons de protection.

La centrale inertielle hybridée comporte une centrale inertielle proprement dite C_INERT, un récepteur de positionnement par satellites, qu'on appellera par la suite récepteur GPS en référence au système de positionnement le plus courant dit « Global Positionning System », et un calculateur électronique d'hybridation CALC_HYB.

La centrale inertielle C_INERT est le plus souvent composée de

- plusieurs accéléromètres, typiquement trois, d'orientations fixes par rapport à l'aéronef, fournissant des valeurs d'accélération selon ces axes,
- plusieurs gyromètres, typiquement trois, ayant chacune un axe fixe par rapport à l'avion et fournissant des valeurs de vitesse de rotation angulaire autour de ces axes,
- un calculateur qui détermine des données numériques de position géographique (Lat, Lon, Alt), vitesse géographique (Vn, Ve, Vv), attitudes en cap roulis et tangage ($\varphi$, $\theta$, $\psi$), etc. à partir des indications fournies par les accéléromètres et gyromètres ; le calculateur fournit aussi une impulsion de marquage temporel définissant l'instant auquel ces données sont valides.

Toutes ces données, appelées ci-après données inertielles brutes D_INERT, sont fournies par la centrale inertielle au calculateur d'hybridation.

Eventuellement, d'autres capteurs peuvent être associés à la centrale pour affiner les calculs, tels qu'un altimètre barométrique (ALT-BARO). Le calculateur de la centrale inertielle utilise alors les informations de ce ou ces capteurs supplémentaires en même temps que les informations des gyromètres et accéléromètres.

Le récepteur GPS fournit classiquement une position géographique en longitude, latitude et altitude, appelée aussi position résolue, incluant aussi un temps de mesure de position. Le récepteur fournit en principe aussi des vitesses de déplacement par rapport à la terre. L'ensemble de cette position, ce temps et cette vitesse est appelée point PVT. Une impulsion de marquage temporel définissant l'instant de validité du point PVT est également fournie.

Le récepteur GPS utilise pour son fonctionnement une mesure de distances entre le récepteur et chaque satellite en vue du récepteur. Ces distances sont en réalité des pseudo-distances $PD_i$ (i désignant un numéro de satellite) obtenues sous forme de durées de propagation de signal entre le satellite de rang i et le récepteur le long de l'axe (axe satellite) joignant le satellite et le récepteur. C'est la combinaison des pseudo-distances sur plusieurs axes satellites avec la connaissance des positions des satellites à un moment donné (envoyée sous forme d'éphémérides par les satellites eux-mêmes) qui permet de calculer la position résolue PVT.

Les pseudo-distances $PD_i$ sont donc disponibles dans le récepteur GPS et elles vont être utilisées pour l'hybridation entre la centrale inertielle et le récepteur GPS. On pourrait bien entendu utiliser l'information de position résolue pour faire l'hybridation en comparant la position résolue GPS avec la position calculée par intégration dans la centrale inertielle, mais, comme on le verra plus loin, l'utilisation de pseudo-distances permet de faire l'hybridation en prenant en compte des pannes ou défauts possibles présents sur le signal issu d'un satellite.

Le récepteur GPS établit encore d'autres données, et notamment les éphémérides représentant la position des satellites à tout instant, un rapport signal/bruit $(S/N)_i$ pour chaque satellite, et une ou plusieurs valeurs de rayon de protection Rp1 (en distance horizontale), Rp2 (en distance verticale) qui représentent une précision de mesure et sur lesquels on reviendra plus loin.

Le récepteur GPS fournit au calculateur d'hybridation CALC_HYB toutes ces données, appelées ci-après D_GPS (données GPS).

Les données inertielles brutes D_INERT et les données GPS sont traitées dans le calculateur d'hybridation pour fournir des données inertielles hybrides D_HYB qui sont une attitude hybride, une vitesse hybride et une position hybride. Le calculateur d'hybridation fournit aussi une ou plusieurs valeurs de rayon de protection RPH représentant la précision des données issues de l'hybridation. Enfin, le calculateur peut fournir des données d'identification de satellite fautif et bien entendu éventuellement des signaux d'alarme lorsque le calcul des rayons de protection démontre une fiabilité insuffisante de l'information fournie.

Pour la mise en oeuvre de l'invention, le récepteur GPS fournit également au calculateur d'hybridation une indication, pour chaque satellite observé, de la phase $\phi_i$ de la porteuse du signal satellite de rang i à l'instant d'observation.

L'hybridation est réalisée par des algorithmes de filtrage de Kalman pour obtenir à la fois les qualités de stabilité et d'absence de bruit à court terme de la centrale inertielle et la précision très élevée mais fortement bruitée à court terme du récepteur GPS. Le filtrage de Kalman permet de prendre en compte les erreurs de comportement intrinsèques de la centrale inertielle C_INERT, et de corriger ces erreurs. L'erreur de mesure de la centrale inertielle est déterminée au cours du filtrage ; elle est ajoutée à la mesure fournie par la centrale pour donner une mesure hybride dans laquelle les erreurs dues au comportement de la centrale sont minimisées.

De plus, la réalisation de l'algorithme de filtrage, utilisant les pseudo-distances issues du récepteur GPS et les phases de la porteuse des signaux satellites, est telle qu'on peut déterminer les satellites fautifs, les exclure, et calculer les rayons de protection de la position hybride à la fois en l'absence de défaut d'un satellite et en présence d'un défaut.

Le calculateur d'hybridation est donc conçu à la fois pour corriger les erreurs inhérentes à la centrale inertielle et pour prendre en compte les défauts du segment spatial de la réception des signaux satellites.

On peut également prévoir des moyens supplémentaires pour détecter (mais pas forcément corriger) des défauts matériels de la centrale inertielle (défauts non modélisés, c'est-à-dire des pannes) et des défauts matériels du récepteur GPS. Ces moyens consistent en pratique à prévoir des chaînes redondantes, avec une autre centrale inertielle, un autre récepteur GPS et un autre calculateur d'hybridation. Ce type de redondance ne fait pas l'objet de la présente invention et ne sera pas décrit, mais l'invention peut être incorporée à des systèmes redondants comme à des systèmes non redondants.

L'hybridation est faite en boucle ouverte, c'est-à-dire que la centrale inertielle n'est pas asservie sur les données résultant de l'hybridation.

D'une manière générale, il est nécessaire d'introduire des valeurs initiales dans la centrale inertielle et dans le calculateur d'hybridation. Ces valeurs initiales sont données la première fois en référence à un repère absolu : par exemple au départ d'un avion au sol, immobile, dans une attitude connue et à une position connue, on introduit cette attitude et cette position comme valeurs initiales dans le filtre. Ultérieurement, en cours de vol, on réinitialisera de temps en temps les mesures fournies par la centrale inertielle en fonction des mesures fournies par le récepteur GPS.

On va maintenant décrire la manière dont le filtrage de Kalman est mis en oeuvre pour combiner des informations issues de la centrale inertielle et des informations du récepteur GPS.

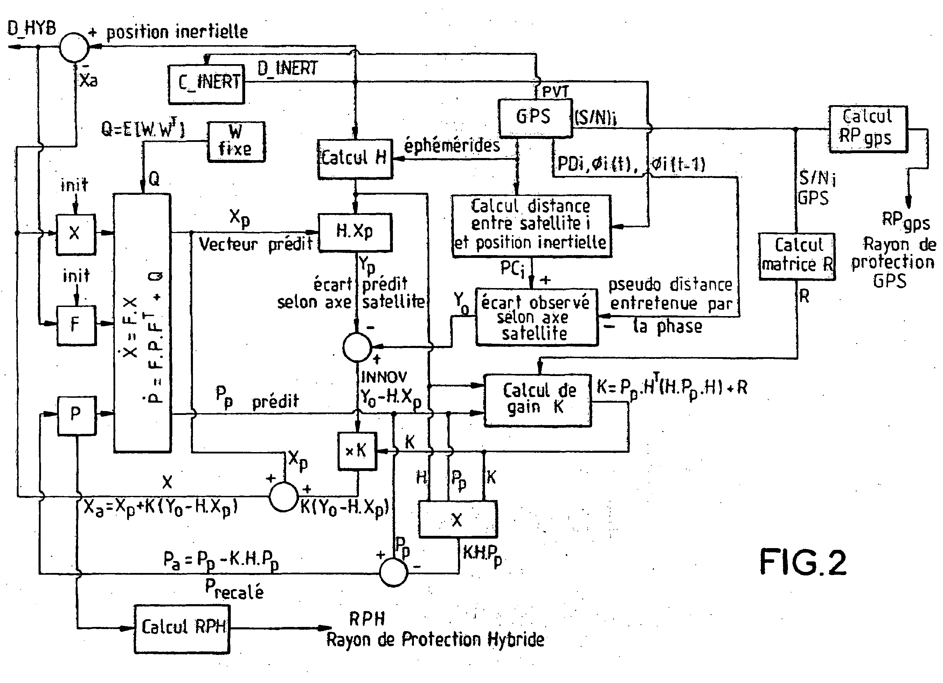

La figure 2 représente un organigramme de fonctionnement de ce filtrage (qui est un filtrage algorithmique mis en oeuvre sur des données numériques). Le filtrage qui est décrit suppose qu'il y a N satellites observés par le récepteur GPS. Comme on le verra plus loin, il y aura en fait N+1 filtrages de Kalman différents : d'une part un filtrage principal, fondé sur les mesures issues des N satellites, et aboutissant à la correction des mesures de la centrale inertielle, et N filtrages secondaires, fondés chacun sur la réception de N-1 satellites seulement. Chaque filtrage secondaire correspond à l'exclusion d'un satellite et un seul, et la comparaison des résultats des N filtrages secondaires et du filtrage principal permet d'aboutir éventuellement à la conclusion qu'un satellite est défectueux et même à la décision d'exclusion de ce satellite pour les mesures qui suivent. Le filtrage principal et les N filtrages secondaires sont définis par N+1 programmes de calcul fonctionnant soit en parallèle avec N+1 processeurs, soit en temps partagé avec un seul processeur ou un nombre de processeurs réduit.

Etant donné que les filtrages secondaires fonctionnent sur les mêmes principes que le filtrage principal, la seule différence portant sur le nombre de satellites observés, on peut se contenter de décrire le fonctionnement du filtrage principal.

On rappelle le principe du filtrage de Kalman :

Les différentes causes de dérive ou d'erreurs de la centrale inertielle C_INERT sont connues et peuvent être modélisées. Le filtrage de Kalman consiste à établir, sur la base de cette connaissance du comportement de la centrale en présence des différentes causes d'erreur, un vecteur d'état X représentant les erreurs estimées sur les différentes composantes d'information issues de la centrale inertielle, et une matrice F représentant les coefficients de propagation de ces erreurs dans le temps.

Le modèle de propagation des erreurs est exprimé sous la forme d'une loi de propagation des erreurs inertielles, de la forme X' = F.X où X' est la dérivée temporelle du vecteur X. L'erreur sur une donnée dépend des erreurs sur les autres données, d'où la forme matricielle de la loi de propagation.

La matrice F est une matrice de coefficients qui ne sont pas nécessairement constants et qui peuvent varier par exemple en fonction des valeurs de sortie de la centrale inertielle hybride. Le filtre comporte les moyens de calcul et de réactualisation des différents termes de la matrice.

D'autre part, le modèle de comportement de la centrale inertielle est également défini par une matrice de covariance (matrice P). Les coefficients de cette matrice représentent la variance de chacune des composantes du vecteur d'état et la covariance des différentes paires de composantes de ce vecteur. La matrice P représente en quelque sorte le degré de confiance qu'on attribue au vecteur d'état réactualisé. La matrice de covariance P varie elle-même au cours du temps, la loi de propagation temporelle de cette matrice étant de la forme :

$$P' = F.P.F^T + Q,$$

Où P' est la dérivée temporelle de la matrice P ; $F^T$ est la matrice transposée de F ; et Q est une matrice de variance d'un vecteur de bruit W ayant une composante de bruit pour chaque donnée du vecteur d'état X. Ce vecteur W est un vecteur de bruit blanc permettant de quantifier les approximations faites dans la modélisation pour chaque composante du vecteur d'état X.

Enfin, pour l'hybridation proprement dite, on établit un vecteur prédit Yp, qui est une combinaison linéaire Yp = H.Xp d'une prédiction Xp du vecteur d'état X (les coefficients de la combinaison linéaire variant au cours du temps) ; et on compare les composantes du vecteur prédit Yp avec des composantes similaires d'un vecteur Yo observé à l'aide du récepteur GPS et de la centrale inertielle. Le terme H est une matrice représentant les coefficients de la combinaison linéaire ; pour faire comprendre la nature de cette matrice, on peut dire la chose suivante : si le récepteur GPS fournit des pseudo-distances observées entre le récepteur et un satellite, donc le long d'axes satellites, et si on veut se servir de ces pseudo-distances observées pour recaler la position hybride, il faut que le filtre de Kalman comporte des moyens de calcul pour établir des « pseudo-distances » prédites le long des axes satellites, avant de détecter un écart entre les pseudo-distances prédites et les pseudo-distances observées le long des mêmes axes. C'est le rôle de la matrice H que de convertir certaines composantes du vecteur d'état X (qui a priori ne sont pas des distances le long des axes récepteur/satellites) en distances le long des axes récepteur/satellites.

Dans le filtre de Kalman qu'on va utiliser en pratique, les composantes du vecteur d'état X sont les écarts entre la réalité et les données fournies par la centrale inertielle avant hybridation. Autrement dit, si φ, θ, ψ, Lat, Lon, Alt, sont six données d'attitude et de position fournies par la centrale inertielle C_INERT (il y a en pratique encore d'autres données fournies par la centrale inertielle), le vecteur d'état X est constitué par une colonne de composantes δφ, δθ, δψ, δLat, δLon, δAlt, etc., représentant les écarts entre les valeurs exactes et les valeurs réellement fournies par la centrale inertielle C-INERT.

Le filtre de Kalman fonctionne globalement sur le principe général suivant : à partir d'une valeur actuelle du vecteur d'état X et de la matrice P de covariance du vecteur d'état, le modèle de propagation des erreurs inertielles (matrice F, équations différentielles de propagation) établit un vecteur d'état prédit Xp ; ce vecteur est transformé en vecteur observable prédit Yp ; le récepteur GPS et la centrale inertielle fournissent des données qui permettent de calculer un vecteur observé Yo ; le vecteur observable prédit Yp et le vecteur observé Yo sont comparés ; la différence, multipliée par une matrice de gain K calculée à partir de la matrice P, sert à calculer une nouvelle estimation Xa du vecteur d'état X et une nouvelle estimation de la matrice P ; cette estimation Xa vient se substituer à la précédente valeur du vecteur d'état pour devenir une nouvelle valeur actuelle du vecteur d'état ; cette substitution est l'opération de recalage du modèle, effectué périodiquement ; de même une estimation Pa de la matrice P vient se substituer à la valeur précédente. Enfin, avec la nouvelle valeur du vecteur d'état, on vient corriger les données D_INERT fournies par la centrale inertielle, pour produire des données corrigées ou données hybrides D_HYB en sortie de la centrale hybridée. La correction à ce stade est une simple addition entre les données brutes D_INERT fournies par la centrale inertielle et le vecteur d'état Xa qui représente l'estimation actuelle des erreurs produites par la centrale inertielle.

Les valeurs observées (vecteur Yo) par la centrale inertielle hybridée, établies en vue d'une comparaison avec des valeurs Yp prédites par le filtre de Kalman, sont alors des écarts entre des données fournies par le récepteur GPS et des données comparables fournies par la centrale inertielle. Ces écarts sont, en ce qui concerne les mesures de position, des distances selon les axes reliant la centrale aux satellites.

C'est ce que représente l'organigramme de fonctionnement de la figure 2. Le détail du fonctionnement va maintenant être décrit.

Le modèle de propagation des erreurs inertielles est représenté par la matrice F, la matrice P, la matrice Q, le vecteur d'état X, et les équations différentielles X' = F.X et P' = F. P. $F^T$ + Q.

La matrice F a des coefficients fixes et d'autres qui dépendent de la position à laquelle la centrale se trouve ; ces derniers coefficients sont donc remis à jour périodiquement en fonction des données hybrides D_HYB issues de la centrale hybridée c'est-à-dire résultant finalement des calculs faits par le calculateur d'hybridation.

Au départ, le vecteur d'état X est initialisé à zéro. Les données de sortie hybrides D_HYB sont de préférence initialisées à des valeurs fournies soit par le récepteur GPS, soit par des données connues (avion immobile au sol, dont on connaît à la fois la position géographique et l'attitude).

La matrice P est initialisée avec les variances et covariances connues à l'endroit où on fait l'initialisation, notamment celles liées au récepteur GPS.

Les équations différentielles du modèle ainsi initialisé font intervenir la matrice F, la matrice P et la matrice Q ; elles permettent de déterminer un vecteur prédit Xp à partir du vecteur actuel X, et une matrice de covariance prédite Pp à partir de la matrice actuelle P.

Dans ce qui suit on s'intéressera principalement aux composantes de position du vecteur d'état, et on ne mentionnera donc que ces composantes, étant donné que la position est l'élément le plus important qui justifie l'hybridation entre la centrale inertielle et le récepteur GPS. Bien entendu, le raisonnement est le même pour les composantes de vitesse, et pour d'autres composantes du vecteur d'état.

A partir du vecteur prédit Xp, converti en axes satellites par la matrice H, on calcule un vecteur observable prédit Yp = H.Xp. La matrice H est calculée d'une part à partir des éphémérides des satellites, permettant de déterminer la position des satellites à un instant donné, et d'autre part à partir de la position inertielle donnée par la centrale inertielle C_INERT. Le vecteur prédit Yp correspond à des erreurs prédites, ramenées en axes satellites.

Les erreurs prédites Yp sont comparées aux erreurs réellement observées Yo. Les erreurs observées comprennent des composantes de position $Yo_i$, sur chaque axe satellite ; ces composantes sont constituées par une différence entre la distance récepteur-satellite $PD_i$ telle que mesurée par le récepteur GPS et la distance centrale inertielle/satellite $PC_i$ calculée à partir de la position inertielle donnée par la centrale C_INERT et des éphémérides détectées par le récepteur GPS.

$$Yo_i = PC_i - PD_i$$

La différence, à chaque opération de recalage, entre le vecteur prédit Yp et le vecteur observé Yo, est la grandeur vectorielle servant au recalage. Cette différence est appelée vecteur d'innovations :

$$INNOV = Yo - Yp = Yo - H.Xp$$

Elle représente le fait que la prédiction n'est pas parfaite puisqu'on a prédit Yp et qu'on observe Yo, et qu'il faut modifier le vecteur d'état Xp et la matrice prédite Pp pour se rapprocher d'un vecteur d'état X et d'une matrice P qui modélisent bien le comportement réel de la centrale inertielle.

Les innovations (composantes du vecteur INNOV) ne sont pas appliquées de manière brutale au vecteur d'état prédit Xp pour constituer un nouveau vecteur X actuel. Au contraire, une fraction seulement des innovations (fraction inférieure à 1) est appliquée au vecteur prédit pour constituer un vecteur actualisé, et ce n'est que progressivement, au fur et à mesure des recalages progressifs, que le vecteur prédit se rapprochera du vecteur observé Yo.

Une matrice de gain K est donc élaborée pour déterminer, pour chaque composante du vecteur d'état, un gain respectif inférieur à 1, représentant la fraction d'innovation qu'on rajoutera à la composante prédite pour définir une composante actualisée du vecteur d'état.

L'équation d'actualisation du vecteur d'état de X en Xa est alors :

$$Xa = Xp + K.(Yo-Yp)$$

La matrice K est élaborée en tenant compte de la matrice H, pour reconvertir dans le repère du vecteur d'état X les innovations Yo-Yp qui sont en axes satellites. Par ailleurs, la matrice de gain est calculée à partir de la matrice de variance prédite Pp, le gain attribué aux innovations pour converger vers une solution hybride la meilleure possible étant fonction de la confiance qu'on a dans l'exactitude du vecteur d'état.

Le calcul de la matrice K est fait par l'équation :

$$K = P.H^T[H.P.H^T + R]^{-1}$$

R est une matrice de composantes de bruit représentant le bruit propre du récepteur GPS lorsque ce bruit peut être mesuré par le récepteur GPS. A cet effet, une donnée de rapport signal/bruit $(S/N)_i$ est de préférence fournie par le récepteur GPS pour chaque satellite. Le bruit est facilement mesuré par un corrélateur non aligné avec le code pseudo-aléatoire qui module le signal satellite, ce corrélateur recevant les signaux satellites et autres signaux présents dans la même bande de fréquence, le tout représentant le bruit.

Le calcul de la matrice de gain K est refait à chaque opération de recalage, les gains sur les innovations dans les axes du vecteur d'état variant au cours du temps non seulement du fait de changements dans la matrice de covariance, mais aussi du fait de changements dans l'orientation des axes satellites.

Le vecteur d'état actualisé Xa vient remplacer le vecteur d'état précédent X en amont du modèle de propagation des erreurs inertielles, pour le calcul d'une nouvelle prédiction d'erreur, et ainsi de suite.

Parallèlement au calcul d'un vecteur d'état actualisé, on calcule une matrice de covariance actualisée Pa à partir de la matrice de covariance prédite Pp. Le calcul de la matrice actualisée Pa résulte de la formule :

$$Pa = Pp - K.H.Pp$$

La matrice actualisée Pa vient remplacer la matrice de covariance P en entrée du modèle de propagation des erreurs inertielles, en vue d'une nouvelle prédiction et d'un nouveau recalage.

C'est à partir du vecteur d'état actualisé Xa, qui est un vecteur d'estimation des erreurs de la centrale inertielle, qu'on calcule la solution hybride : les composantes de la solution hybride (position, attitudes, vitesses, etc.) sont obtenues en additionnant aux composantes correspondantes fournies par la centrale inertielle (données inertielles brutes) l'estimation actualisée Xa des erreurs dues à la centrale inertielle :

$$D\_HYB = D\_INERT + Xa$$

Parallèlement, c'est à partir de la matrice de covariance actualisée Pa qu'on peut calculer un rayon de protection des mesures hybrides : la matrice Pa permet de calculer directement un rayon de protection de la mesure hybride à condition qu'il n'y ait pas de panne. On explicitera plus loin ce calcul de rayon de protection.

Mais, comme on l'a dit, si on a prévu non seulement l'algorithme de filtrage de Kalman principal qu'on vient de décrire mais aussi N algorithmes secondaires excluant à chaque fois un axe satellite, c'est pour permettre également une détermination d'un satellite fautif, l'exclusion de ce satellite fautif, et la détermination d'un rayon de protection associé en présence de panne. On reviendra plus loin sur ces questions relatives aux rayons de protection.

Pour cet algorithme de filtrage de Kalman, aussi bien l'algorithme principal que les algorithmes secondaires, on a prévu de calculer des différences $Yo_i = PC_i - PD_i$ qui sont, sur chaque axe satellite non exclu de rang i, la différence entre la distance récepteur/satellite mesurée par la centrale inertielle et la même distance mesurée par le récepteur GPS.

Selon l'invention, pour ce calcul de la grandeur de mesure observée Yo, la distance mesurée par le récepteur GPS sur l'axe de satellite i est obtenue, d'une opération de recalage à la suivante, en ajoutant à la distance précédemment observée une distance correspondant à la variation de phase de porteuse du signal satellite entre l'opération de recalage en cours et l'opération de recalage précédente.

$$PD_i(t) = PD_i(t-1) + \lambda.\Delta\Phi_i/2\pi$$

où t est le temps (compté en unités correspondant à la durée séparant deux recalages successifs, par exemple une seconde) ; $PD_i(t)$ représente la distance calculée au moment du recalage actuel, $PD_i(t-1)$ représente donc la distance calculée lors du recalage précédent ; $\Delta\Phi_i$ est la variation de phase de porteuse observée entre t-1 et t ; $\lambda$ est la longueur d'onde (connue) de la porteuse du signal satellite ; $\lambda.\Delta\Phi_i/2\pi$ est la longueur, selon l'axe satellite de rang i, correspondant à la distance de propagation du signal satellite pour une variation de phase $\Delta\Phi_i$.

Lors de l'initialisation du système, la distance $PD_i(0)$ est la pseudo-distance mesurée par le récepteur de positionnement par satellite, mais, en même temps que cette distance est calculée, on conserve en mémoire la valeur de la phase de porteuse $\Phi_i(0)$ à l'instant de validité de la mesure. De même, à chaque étape de recalage, on garde en mémoire la valeur de la phase de porteuse $\Phi_i(t-1)$ en vue de l'étape suivante. Lors des étapes de recalage suivantes, on calcule la variation de phase par simple différence entre la valeur $\Phi_i(t)$ de la phase de porteuse actuelle et la valeur précédente $\Phi_i(t-1)$.

$$\Delta\Phi_i = \Phi_i(t) - \Phi_i(t-1).$$

Et c'est cette variation, multipliée par $\lambda/2\pi$ pour la ramener à une distance de propagation, qui est ajoutée à la pseudo-distance précédemment calculée pour définir la nouvelle pseudo-distance servant au calcul de la grandeur observée $Yo_i$.

La phase $\Phi_i(t)$ est obtenue à partir du contenu d'un oscillateur à commande numérique présent dans le circuit d'asservissement de phase de porteuse de chaque canal (il y a un canal par satellite) du récepteur GPS.

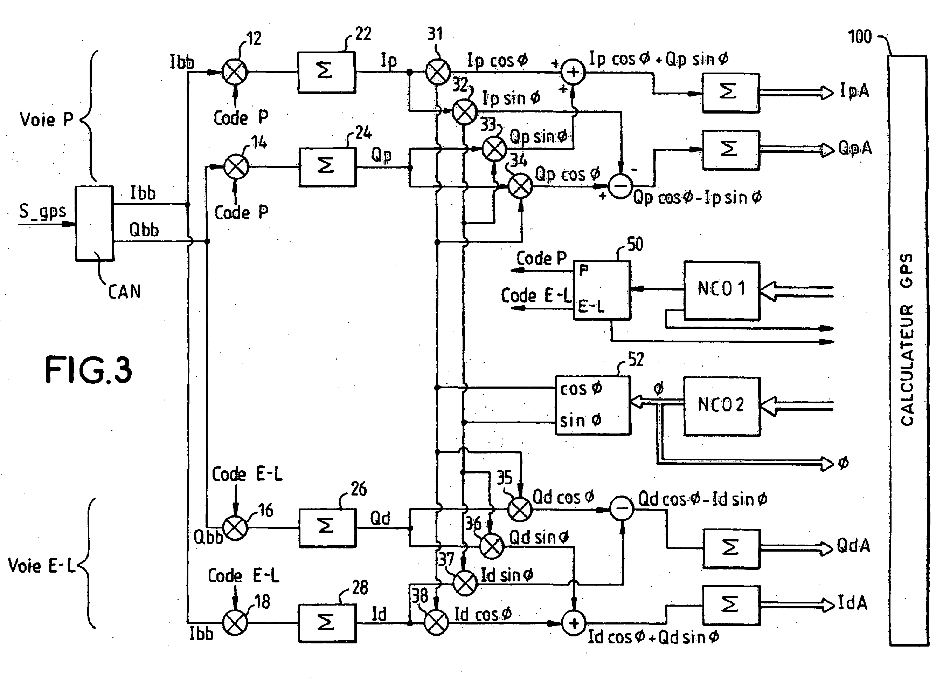

La figure 3 représente un exemple de structure d'un canal numérique d'un récepteur GPS comportant un tel circuit d'asservissement de phase. Tous les récepteurs GPS comportent actuellement dans chaque canal un tel circuit d'asservissement de phase de la porteuse, et ce circuit comporte toujours un oscillateur à commande numérique pour établir une phase variant linéairement en dent de scie et représentant à un instant donné, du fait de l'asservissement, la phase de la porteuse du signal satellite.

Le signal radio S_gps issu des satellites et transposé en fréquence, est par exemple échantillonné par un convertisseur analogique-numérique CAN, qui fournit des échantillons périodiques, en phase (Ibb) et en quadrature de phase (Qbb). Ces échantillons sont multipliés (multiplieurs 12, 14, 16, 18) par un code pseudo-aléatoire correspondant au canal considéré donc au satellite considéré. Deux corrélations différentes peuvent être effectuées simultanément, l'une avec un code ponctuel P (multiplicateurs 12, 14) et l'autre avec un code avance-retard E-L (multiplicateurs 16, 18). Les codes pseudo-aléatoires sont produits par un générateur de code local 50 piloté par un oscillateur à commande numérique NCO1, lui-même commandé par un calculateur 100 associé au récepteur GPS. Les résultats des quatre multiplications sont cumulés dans des accumulateurs 22, 24, 26, 28 respectifs. Les sorties Ip, Qp (corrélation par code ponctuel P) et Id, Qd (corrélation par code différence E-L) des accumulateurs sont multipliées (multiplieurs 31 à 38) par une valeur cosΦ et une valeur sinΦ représentant respectivement le cosinus et le sinus de la phase Φ de la porteuse. Les sorties de ces multiplieurs permettent de calculer des sommes et différences de produits, et des accumulations périodiques IpA, QpA, IdA, QdA, de ces sommes et produits, qui représentent des résultats partiels de la corrélation du signal GPS avec le code et la porteuse localement générés dans le canal. Ces résultats sont fournis au calculateur associé et servent en retour à piloter la boucle d'asservissement pour aligner le code local ponctuel P sur le code présent dans le signal satellite, et pour aligner la phase de porteuse locale sur la phase du signal satellite.

La phase de porteuse locale est établie par un deuxième oscillateur à commande numérique de phase NCO2, qui produit une phase Φ variant en dent de scie. Cette phase est appliquée à un générateur de sinus et cosinus pour établir les valeurs sinΦ, cosΦ à partir de la phaseΦ présente en sortie de l'oscillateur local NCO2. C'est cette sortie de l'oscillateur local, transmise par ailleurs au calculateur associé 100, qui représente, à un instant de mesure t, la phase $\Phi_i(t)$ de la porteuse dans le canal correspondant au satellite de rang i.

Le calcul de position hybride et le calcul des rayons de protection se fera donc d'une mesure à la suivante en observant la différence entre le contenu de l'oscillateur NCO2 à l'instant t et le contenu à l'instant t-1 et en transmettant cette différence au filtre de Kalman selon ce qui a été expliqué précédemment.

Ayant ainsi décrit le fonctionnement du filtre de Kalman en relation avec les variations de phase de porteuse observées sur chaque axe satellite dans le récepteur GPS, on revient maintenant au calcul du rayon de protection des données hybrides D_HYB. Comme on l'a dit, ce rayon de protection est une mesure très importante dans certaines applications où il indispensable de connaître la précision avec laquelle les données sont obtenues.

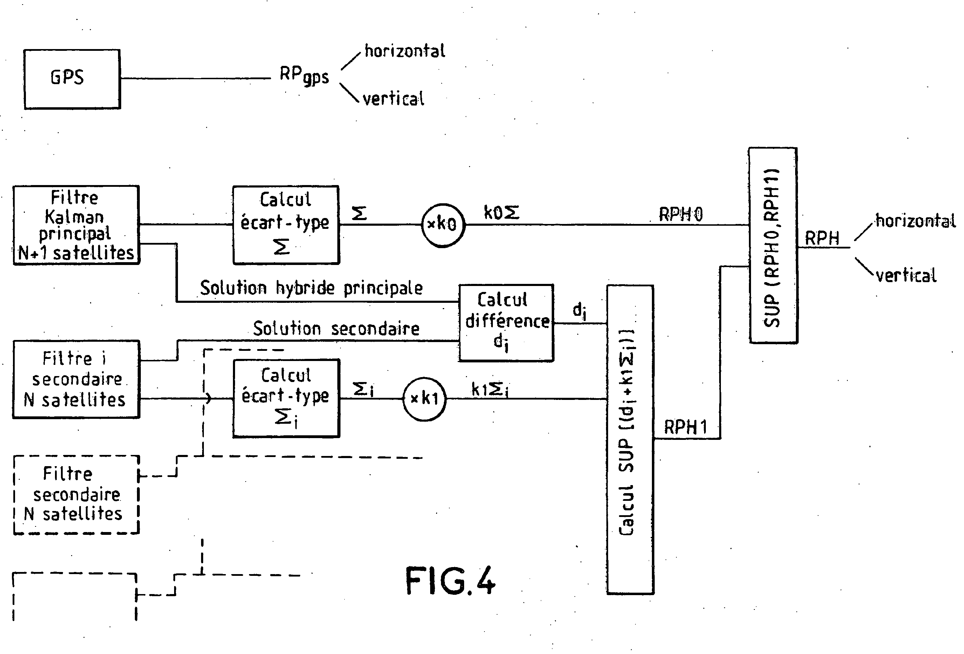

La figure 4 représente un schéma d'obtention des différents rayons de protection calculés dans la centrale inertielle hybride.

D'une part le rayon de protection propre RPgps du récepteur GPS est calculé (soit dans le récepteur GPS lui-même soit dans le calculateur d'hybridation si celui-ci reçoit toutes les données internes au récepteur GPS nécessaires au calcul du rayon de protection : pseudo-distances $PD_i$, rapports signal/bruit $(S/N)_i$ pour chaque axe satellite, etc.). D'autre part, un rayon de protection hybride RPH0 est calculé en supposant qu'il n'y a pas de satellite défectueux dans la constellation de N satellites observée à un moment donné. Enfin, un rayon de protection hybride RPH1, correspondant à la présence d'un satellite défectueux, est calculé.

On rappelle que le rayon de protection RP d'une mesure, pour une probabilité de non détection d'erreur prédéterminée PND, est une borne supérieure de l'écart entre la valeur calculée et la valeur réelle de la grandeur mesurée, telle qu'on a une probabilité inférieure à PND que la valeur réelle soit éloignée de la valeur calculée d'une distance supérieure à RP. Il y a donc une probabilité maximale PND pour que la valeur réelle soit en dehors d'un cercle de rayon RP autour de la valeur qu'on a trouvée par calcul : probabilité maximale PND pour que l'erreur réelle de mesure excède le rayon de protection annoncé. Ceci revient encore à dire qu'on a une probabilité maximale PND de s'être trompé dans la détermination du rayon de protection.

En général, on se fixe la probabilité maximale PND, en fonction de l'application. Dans l'exemple de l'atterrissage d'un aéronef par exemple, on peut souhaiter une probabilité maximale PND de $10^{-7}$/heure de se tromper sur le rayon de protection en raison d'un défaut prévisible ou imprévisible.

Or le rayon de protection est lié directement à la variance de la grandeur mesurée et à la probabilité de non détection d'erreur PND. La variance est le carré de l'écart-type Σ lié à la grandeur mesurée. La variance de la grandeur hybride mesurée est le coefficient de la diagonale de la matrice de covariance P qui correspond à la grandeur mesurée. Si l'altitude de la centrale inertielle est la grandeur mesurée et se situe au sixième rang dans le vecteur d'état et dans la matrice de variance P, la variance de l'altitude est le sixième coefficient dans la diagonale de la matrice. L'écart-type Σ est la racine carrée de cette variance. Il se déduit donc de la matrice P dans un filtre de Kalman.

Le rayon de protection RP est lié à l'écart-type $\Sigma$ et la probabilité de non-détection PND par le tableau approximatif suivant,

| Valeur de PND | Valeur de RP |
|---|---|
| 0,35/heure | $\Sigma$ |
| $5.10^{-2}$/heure | $2\Sigma$ |
| $10^{-3}$/heure | $3\Sigma$ |
| $10^{-7}$/heure | $5,7\Sigma$ |
| $10^{-9}$/heure | $7\Sigma$ |

Selon la probabilité de non-détection qu'on se fixe (et donc selon l'application envisagée) on peut donc déterminer un coefficient k tel que le rayon de protection RP soit égal à $k\Sigma$. Le coefficient k prend une valeur comprise entre 1 et 7 dans le tableau précédent.

Ce rayon de protection est calculé à partir des écarts-types des variables considérées. Il s'applique à chaque variable possible, mais en pratique on s'intéresse aux variables de distance.

Un calcul de rayon de protection est fait à l'intérieur du récepteur GPS pour aboutir à un rayon de protection propre RPgps du point PVT fourni par le récepteur. On peut même calculer plus spécifiquement un rayon de protection vertical pour l'altitude et un rayon de protection horizontal pour la position en longitude et latitude, ces rayons n'ayant pas forcément la même valeur et n'étant pas utilisés de la même manière (le rayon de protection vertical est une donnée plus critique). Le rayon de protection propre du GPS est utile pour l'initialisation ou la réinitialisation du calcul d'hybridation entre la centrale inertielle et le récepteur GPS : on affecte comme position initiale de la centrale inertielle la valeur du point PVT fourni par le GPS, avec son rayon de protection propre.

Un autre calcul de rayon de protection est fait au sein du calculateur d'hybridation, en présence d'erreurs modélisées dans le filtre de Kalman. Plus précisément deux calculs sont faits, l'un supposant une absence de panne de satellite, et l'autre supposant la présence d'une panne de satellite ; cela aboutit à deux rayons de protection hybrides RPH0 (absence de panne) et RPH1 (présence de panne). Le rayon de protection global sera considéré comme étant le plus grand des deux. Il n'est pas nécessaire de calculer un rayon de protection dans le cas de deux ou plusieurs satellites en panne, la probabilité de se trouver dans cette configuration étant considérée comme trop faible.

En ce qui concerne le rayon de protection RPH1 en présence d'une panne sur un satellite, il faut tout d'abord noter qu'on connaît en principe la probabilité maximale qu'il y ait un défaut du segment spatial (défaut sur un satellite). Supposons qu'elle soit de $10^{-4}$/heure :

cela ramène la probabilité d'avoir un défaut sur deux satellites à la fois à $10^{-8}$/heure, ce que l'on considérera ici comme négligeable mais qui pourrait être pris en compte si on voulait réduire encore au dessous de $10^{-7}$/heure la probabilité de non détection d'erreur PND. Dans ce qui suit on considérera qu'une probabilité de non-détection de $10^{-7}$/heure est un but à atteindre quelle que soit la configuration, panne ou absence de panne.

On se sert cependant de cette information de probabilité de panne du segment spatial pour réduire la probabilité de non détection d'une autre panne que la panne satellite simultanément avec une panne de satellite.

En d'autres mots, si on est en présence d'une panne satellite alors qu'une telle panne ne se produit qu'avec une probabilité de $10^{-4}$/heure, on considérera qu'il suffit d'une probabilité de non détection de $10^{-3}$/heure d'une erreur autre que cette panne pour que globalement une probabilité de non-détection de $10^{-7}$/heure soit assurée. Pour une probabilité de $10^{-3}$/heure, le rapport k entre le rayon de protection et l'écart-type n'est que de 3, alors qu'il est de 5,7 pour une probabilité $10^{-7}$/heure.

Dans les deux cas, le calcul du rayon de protection fait intervenir les écarts-types des variables de position considérées.

Calcul du rayon de protection RPH0 en l'absence de panne de satellite

On prélève la variance d'une grandeur mesurée, par exemple l'altitude, dans la matrice de covariance actualisée Pa, on en prend la racine carrée pour avoir l'écart-type $\Sigma_{alt}$ de la même grandeur, on multiplie le résultat par le rapport k=k0 souhaité (par exemple k0 = 5,7) et on obtient le rayon de protection hybride RPH0 (ici en altitude : $RPH0_{alt}$) en l'absence de panne autre que les erreurs modélisées par le filtre de Kalman.

$$RPH0_{alt} = k0.\Sigma_{alt}$$

Sans entrer dans les détails, on comprend que si on préfère un rayon de protection horizontal global plutôt qu'un rayon de protection en longitude et un rayon de protection en latitude, on doit additionner les variances en longitude et latitude pour obtenir une variance globale en distance horizontale et un écart-type horizontal.

$$RPH0_{hor} = k0.\Sigma_{hor}$$

Les rayons de protection de grandeurs qui sont des distances sont évidemment exprimées en distances, les rayons de protection des grandeurs qui sont des vitesses ou des angles sont exprimés en vitesses ou en angles.

Ce rayon de protection est donc tiré directement des réactualisations successives de la matrice de covariance P.

Calcul du rayon de protection RPH1 en présence de panne satellite

Comme on l'a dit, si on désire une probabilité globale de non détection globale de $10^{-7}$/heure (k = k0 = 5,7), si la probabilité de panne satellite est de $10^{-4}$/heure et si on se trouve dans un cas de panne satellite, on considère que la probabilité de non détection simultanée d'une erreur dans le processus de calcul d'hybridation est alors de $10^{-3}$/heure, correspondant à un coefficient k = k1 = 3.

Le rayon de protection RPH1 qui va être calculé dans ce cas résulte de l'addition de deux facteurs : un facteur $k1.\Sigma$ lié à la probabilité de non détection de $10^{-3}$/heure pour une erreur modélisée dans les algorithmes de Kalman, et des écarts tirés des N +1 algorithmes de filtrage de Kalman.

On rappelle que l'algorithme de filtrage principal utilise les N satellites, et que les N autres algorithmes de filtrage excluent à chaque fois un satellite de rang i. Ces N algorithmes secondaires aboutissent chacun à une position hybride et à des écarts-types associés pour chaque variable (par exemple altitude et distances horizontales).

En effet, dans le cas où aucun satellite n'est défectueux, les N+1 algorithmes de filtrage fournissent des positions hybrides très proches les unes des autres et toutes situées à l'intérieur du rayon de protection RPH0 calculé précédemment.

Mais si un satellite est défectueux, les solutions fournies par les N+1 algorithmes de filtrage divergent et donnent N+1 estimations d'erreurs différentes (c'est-à-dire N+1 vecteurs d'état différents Xa). Le calculateur d'hybridation calcule les distances entre les différentes solutions ainsi trouvées. Par exemple, si on s'intéresse au rayon de protection de l'altitude, le calculateur peut calculer les distances entre la solution d'altitude fournie par le filtre principal à N+1 satellites et la solution d'altitude fournie par chacun des N filtres secondaires.

En cas de panne d'un satellite, l'un des filtres secondaires donne une solution exacte dans un rayon de $k1.\Sigma_i$, $\Sigma_i$ étant l'écart-type calculé par ce filtre secondaire et associé à la solution trouvée par ce filtre.

Tous les autres filtres, y compris le filtre principal donnent une solution fausse, mais on ne sait pas quel est le filtre secondaire qui donne la solution exacte.

On calcule donc la distance $d_i$ entre l'erreur d'altitude (composante du vecteur d'état X) donnée par le filtre principal et celle qui est donnée par un filtre secondaire, on rajoute $k1.\Sigma_i$ à cette distance, $\Sigma_i$ étant l'écart-type correspondant à ce filtre. On fait ce calcul pour les N filtres secondaires. On prend la valeur maximale parmi les N valeurs ainsi calculées, et cette valeur constitue le rayon de protection RPH1 en cas de panne d'un satellite.

$$RPH1altitude = SUP[(d_i + k1.\Sigma_i)]$$

Le calcul est similaire pour un rayon de protection horizontal, l'écart-type considéré étant alors la racine carrée de la somme des variances en longitude et en altitude.

Calcul du rayon de protection global

Ayant ainsi calculé deux rayons de protection RPH0 et RPH1, en l'absence et en présence de panne du segment spatial, on prend la valeur la plus grande des deux pour définir un rayon de protection global RPH pour la solution hybride calculée par le calculateur d'hybridation.

$$RPH = SUP[RPH0, RPH1]$$

Ce rayon de protection est calculé en distance verticale d'une part, en distance horizontale d'autre part.

Cette hybridation entre une seule centrale inertielle et un récepteur GPS ne permet pas de prendre en compte une panne éventuelle non modélisée de la centrale inertielle ou du récepteur GPS (par exemple une panne GPS affectant tous les canaux du récepteur).

Si on veut prendre en compte de telles pannes, il faut introduire une redondance, avec une deuxième centrale inertielle, un deuxième récepteur GPS et un deuxième calculateur d'hybridation. La première chaîne d'hybridation fournit une première solution hybride qui sera considérée comme solution principale, avec un écart-type associé $\Sigma$; la deuxième chaîne fournit une solution hybride avec un écart-type associé. Si on considère que la probabilité d'une panne matérielle est de $10^{-4}$/heure, on peut se contenter d'un rayon de protection de $3\Sigma$ autour de chaque solution hybride. On calcule la distance entre les deux solutions hybrides, l'une étant juste dans un rayon de $3\Sigma$ et l'autre étant fausse, on rajoute à cette distance la plus grande des deux valeurs $3\Sigma$; la somme ainsi calculée constitue un rayon de protection global de la solution hybride principale en présence de panne de l'une ou l'autre des chaînes : la solution exacte se situe à l'intérieur d'un cercle ayant ce rayon, autour de la solution hybride principale, avec une probabilité d'erreur de $10^{-3}$/heure dans cet exemple.

Etant donné que la solution hybride principale a elle-même un rayon de protection associé, en l'absence de panne, qui est de $5,7\Sigma$ pour la probabilité globale désirée de $10^{-7}$/heure, on détermine quelle est le rayon de protection le plus élevé entre ce dernier et le rayon de protection global en présence d'une panne de l'une ou l'autre des chaînes. La valeur la plus élevée des deux constitue, pour la centrale hybridée à deux chaînes d'hybridation, le rayon de protection global autour de la solution hybride de la chaîne principale. C'est ce rayon de protection global qui est fourni à l'utilisateur.

On notera qu'on ne peut pas déterminer laquelle des deux chaînes est défectueuse si on n'a pas une troisième voie. C'est pourquoi on donne à l'utilisateur une seule solution hybride qui est celle de la chaîne considérée par hypothèse comme chaîne principale (chacune des deux chaînes peut être considérée comme principale si les chaînes sont identiques).

Les explications qui viennent d'être fournies montrent que le rayon de protection ainsi calculé varie d'une manière progressive : il n'y a pas de saut brusque, et ceci aussi bien dans le cas d'une seule chaîne d'hybridation que dans le cas de redondance avec deux chaînes.

On pourra utiliser le rayon de protection propre du GPS pour recaler les données hybrides : lorsque le rayon de protection propre du GPS devient inférieur au rayon de protection global de la centrale hybride, les données de position du GPS peuvent être fournies comme données de sortie de la centrale hybride.

En revenant maintenant au cas d'une panne du segment spatial, causée par un satellite défectueux, il est souhaitable de pouvoir connaître l'identité du satellite défectueux, et d'exclure ce satellite des mesures ultérieures. Dans le cas de deux chaînes d'hybridation, on vérifiera que c'est le même satellite qui est identifié comme étant défectueux avant de l'exclure.

Pour effectuer cette exclusion, le mieux est de considérer les innovations (INNOV) des filtres de Kalman comme des variables gaussiennes en l'absence de panne ; on calcule périodiquement la somme des carrés des innovations de chacun des filtres, normalisée par les écarts-types associés qui peuvent varier d'un filtre à l'autre. On applique une loi du Khi2 sur ces sommes. On ne doit pas voir apparaître d'incohérence. Si une incohérence apparaît, elle apparaît en principe sur tous les filtres sauf celui qui n'utilise pas le satellite défectueux. On peut ainsi l'identifier, l'exclure des prochains calculs, et dans l'immédiat recaler les données hybrides sur les données fournies par le filtre de Kalman secondaire qui ne comprend pas le satellite défectueux. L'incohérence est déterminée à partir d'un seuil qui dépend de la probabilité de fausse alarme et la probabilité de non-détection qu'on se fixe.

L'invention est applicable dans le cas de l'utilisation de récepteurs DGPS, c'est-à-dire de récepteur recevant, outre les signaux satellites, des signaux de correction envoyés par des stations sol locales qui reçoivent les mêmes signaux de satellites et dont la position exacte est connue. La station sol envoie des corrections de pseudo-distances et ce sont les pseudo-distances $PD_i$ ainsi corrigées qui servent à l'initialisation de l'hybridation, le filtre de Kalman étant ensuite entretenu par des variations de phase de porteuse comme cela a été expliqué.

**Revendications**

1. Système de navigation comprenant une centrale de navigation inertielle (C_INERT) hybridée avec au moins un récepteur de positionnement par satellite (GPS), la centrale inertielle fournissant des informations de position résultant au moins en partie de mesures accélérométriques et gyrométriques, et le récepteur fournissant des pseudo-distances ($PD_i$) représentant la distance entre le récepteur et des satellites, le récepteur comprenant, pour chaque canal du récepteur, un oscillateur à commande numérique de phase (NCO2) asservi sur la phase de porteuse d'un signal de satellite correspondant à ce canal, et le système de navigation fournissant des valeurs de position hybrides (D_HYB) résultant d'une combinaison de données numériques de position provenant de la centrale et de données numériques provenant du récepteur, le système comprenant un moyen d'estimation d'une nouvelle position hybride à partir d'un écart constaté (Yo) entre d'une part des pseudo-distances mesurées par le récepteur entre le récepteur et les différents satellites et d'autre part des distances correspondantes calculées par la centrale inertielle entre la centrale et les mêmes satellites, ce moyen comprenant un filtre numérique, de type filtre de Kalman, permettant la prédiction d'un écart (Yp) et l'adaptation du filtre en fonction de la comparaison entre les écarts constatés (Yo) et des écarts prédits (Yp), **caractérisé en ce que**, dans le filtre numérique, l'incrément de distance d'un instant de mesure à l'instant suivant, entre la pseudo-distance précédemment mesurée par le récepteur sur un axe satellite en vue de la constatation d'un écart et la nouvelle pseudo-distance mesurée par le récepteur sur cet axe, est la variation de phase de l'oscillateur numérique entre les deux instants de mesure, cette variation étant ramenée en distance le long de l'axe satellite.

2. Système de navigation selon la revendication précédente, **caractérisé en ce que** le moyen d'estimation fournit également un rayon de protection (RPH) associé à la position hybride trouvée, ce rayon de protection étant calculé à partir de données de variance produites dans le filtre de Kalman ainsi incrémenté.

**Claims**

1. A navigation system comprising an inertial navigation platform (C_INERT) hybridized with at least one satellite based positioning receiver (GPS), the inertial platform providing position information resulting at least in part from accelerometric and gyrometric measurements, and the receiver providing pseudo-distances ($PD_i$) representing the distance between the receiver and satellites, the receiver comprising, for each channel of the receiver, a digitally phase controlled oscillator (NCO2) slaved to the phase of a carrier of a satellite signal corresponding to this channel, and the navigation system providing hybrid position values (D_HYB) resulting from a combination of numerical position data originating from the platform and numerical data originating from the receiver, the system comprising a means of estimating a new hybrid position on the basis of a noted deviation (Yo) between on the one hand pseudo-distances measured by the receiver between the receiver and the various satellites and on the other hand corresponding distances computed by the inertial platform between the platform and the same satellites, this means comprising a digital filter, of Kalman filter type, allowing the prediction of a deviation (Yp) and the matching of the filter as a function of the comparison between the noted deviations (Yo) and predicted deviations (Yp), **characterized in that**, in the digital filter, the distance increment from one measurement instant to the next instant, between the pseudo-distance previously measured by the receiver on a satellite axis with a view to the noting of a deviation and the new pseudo-distance measured by the receiver on this axis, is the phase variation of the digital oscillator between the two measurement instants, this variation being referred to distance along the satellite axis.

2. The navigation system as claimed in the preceding claim, **characterized in that** the estimating means also provides a protection radius (RPH) associated with the hybrid position found, this protection radius being calculated on the basis of variance data produced in the Kalman filter thus incremented.

**Patentansprüche**

1. Navigationssystem, umfassend eine hybride Trägheitsnavigationszentrale (C_INERT) mit mindestens einem Satellitenortungsempfänger (GPS), wobei die Trägheitszentrale Ortungsinformationen liefert, die sich mindestens teilweise aus Beschleunigungs- und Kreiselmessungen ergeben, und der Empfänger Pseudoentfernungen (PD$_i$) liefert, die die Entfernung zwischen dem Empfänger und Satelliten darstellt, wobei der Empfänger für jeden Empfängerkanal einen digitalen phasengesteuerten Oszillator (NCO2) umfasst, der mit der Trägerphase eines diesem Kanal entsprechenden Satellitensignals verriegelt wird, und das Navigationssystem hybride Ortungswerte (D_HYB) liefert, die sich aus einer Kombination von aus der Zentrale stammenden digitalen Ortungsdaten und von aus dem Empfänger stammenden digitalen Daten ergeben, wobei das System ein Schätzungsmittel einer neuen hybriden Ortung ab einer festgestellten Abweichung (Yo) zwischen vom Empfänger gemessenen Pseudoentfernungen zwischen dem Empfänger und den verschiedenen Satelliten einerseits und von der Trägheitszentrale berechneten entsprechenden Entfernungen zwischen der Zentrale und denselben Satelliten andererseits umfasst, wobei dieses Mittel einen digitalen Filter des Kalmanfilter-Typs umfasst, der die Vorhersage einer Abweichung (Yp) und die Anpassung des Filters entsprechend des Vergleichs zwischen den festgestellten Abweichungen (Yo) und den vorhergesagten Abweichungen (Yp) ermöglicht, **dadurch gekennzeichnet, dass**, im digitalen Filter, das Inkrement der Entfernung eines Messmoments zum nächsten Moment, zwischen der Pseudoentfernung, die vorher vom Empfänger auf einer Satellitenachse zur Feststellung einer Abweichung gemessen wurde, und der neuen Pseudoentfernung, die vom Empfänger auf dieser Achse gemessen wurde, die Phasenvariation des digitalen Oszillators zwischen den beiden Messmomenten ist, wobei diese Variation entlang der Satellitenachse gemäß der Entfernung herbeigebracht wird.

2. Navigationssystem nach dem vorhergehenden Anspruch, **dadurch gekennzeichnet, dass** das Schätzungsmittel ebenfalls einen Schutzradius (RPH) liefert, der mit der gefundenen hybriden Ortung verbunden ist, wobei dieser Schutzradius aus Varianzdaten, die im so inkrementierten Kalmanfilter hergestellt wurden errechnet wird.

FIG.1

EP 1 430 272 B1

FIG.2

EP 1 430 272 B1

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6292750 B